# EUROPÄISCHE PATENTSCHRIFT

(11) **EP 1 857 515 B1**
(45) Veröffentlichungstag und Bekanntmachung des Hinweises auf die Patenterteilung: **17.03.2010**
(21) Anmeldenummer: 07107358.9
(22) Anmeldetag: 02.05.2007
(51) Int. Cl.: C09J 7/02, C09J 153/02

(54) **Maskierung von Fensterflanschen mit einem Klebeband mit einer Selbstklebemasse auf Basis vernetzter Vinylaromatenblockcopolymere**
Masking of window flanges with a self-adhesive tape based on crosslinked vinyl aromatic blockcopolymers
Masquage de rebords de fenêtres utilisant une bande adhésive à base de copolymers blocs vinylaromatiques réticulés

(30) Priorität: 19.05.2006 DE 102006023936
(43) Veröffentlichungstag der Anmeldung: 21.11.2007
(73) Patentinhaber: TESA SE, 20253 Hamburg (DE)
(72) Erfinder: Dr. BÖHM, Nicolai, 20357, Hamburg (DE); Dr. KRAWINKEL, Thorsten, 22457, Hamburg (DE)

(56) Entgegenhaltungen:
- WO-A-03/018701
- WO-A-2005/063913
- DE-A1- 19 952 213

## Beschreibung

Die Erfindung betrifft die Verwendung eines Maskierklebebandes mit einer Selbstklebemasse auf Basis vernetzter Vinylaromatenblockcopolymere insbesondere zur Abdeckung von Fensterflanschen insbesondere in Automobilrohkarosserien, die mit kathodischem Tauchlack (KTL) beschichtet sind. Das Maskierklebeband soll die Fensterflansche bei den nachfolgenden Lackier- und Einbrennprozessen vor dem Überlackieren derartig schützen, dass nach dem Abziehen des Maskierklebeband auf dem füller- und klarlackfreien Fensterflansch eine Automobilglasscheibe mit einem reaktiven PU-Scheibenkleber eingeklebt werden kann.

Automobilglasscheiben werden herkömmlich mit Gummidichtungen in der fertig lackierten Fahrzeugkarosserie fixiert. Dieses Verfahren wurde in den letzten Jahren weitgehend durch das Einkleben der Scheiben mit Reaktivklebstoffen (zum Beispiel auf Polyurethanbasis) ersetzt. Dabei wird die Scheibe am Rand mit einer Kleberaupe versehen und so auf die Karosserie aufgesetzt, dass die Kleberaupe auf den Fensterflansch aufgedrückt wird.

Die eingeklebten Scheiben, insbesondere die Windschutzscheiben, dienen heute als versteifendes Element der Karosserie. Im Extremfall vermeiden sie bei einem Überschlag des Fahrzeugs das Einknicken der Dachsäulen. Daher ist eine ausreichende Verklebungsfestigkeit für die Unfallsicherheit eines modernen Kraftfahrzeugs maßgeblich.

Moderne Autolacke bestehen aus diversen Schichten, die auf das geprimerte Karosseriemetall in folgender Reihenfolge aufgebracht werden (schematisiert):
- elektrophoretischer Tauchlack, meist kathodischer Tauchlack (KTL),
- Füller- oder Funktionsschicht,
- Farbgebender Decklack,
- Klarlack.

Die elektrophoretische Lackierung (Elektrotauchlackierung) stellt ein Tauchverfahren dar, bei dem die Beschichtung durch Einwirkung eines elektrischen Feldes (50 bis 400 V) erfolgt. Der zu lackierende, den elektrischen Strom leitende Körper wird als Anode oder Kathode in das Farbbad eingebracht, in der Praxis fungiert die Beckenwand als zweite Elektrode.
Die abgeschiedene Lackmenge ist der zugeführten Strommenge direkt proportional. Die elektrophoretische Lackierung wird besonders zur Grundierung eingesetzt. Es treten keine Spritzverluste auf, und die erhaltenen Beschichtungen sind auch an schwer zugänglichen Stellen sehr gleichmäßig. Bei nichtleitenden Unterlagen, zum Beispiel Kunststoffen, Glas, Keramik usw. bedient man sich zur Beschichtung der elektrostatischen Aufladung der Lackteilchen (so genannte elektrostatische Lackierung).

Alle Elektrotauchlacke sind wasserlöslich (Suspensionen von Bindemitteln und Pigmenten in vollentsalztem Wasser) mit nur geringen Konzentrationen an organischen Lösemitteln (ca. 3 %). Damit sind weder Brandschutz- noch besondere Arbeitsschutzmaßnahmen beim Betreiben von KTL-Anlagen notwendig
In der Automobilindustrie wird die kathodische Tauchlackierung bevorzugt. Das KTL-Bad besteht zu etwa 80 % aus Wasser, 19 % sind Bindemittel und Pigmente, nur etwa 1 bis 2% sind organische Lösungsmittel. Der pH-Wert ist leicht sauer und liegt bei etwa 6 bis 6,5. Der Abscheidemechanismus gliedert sich in mehrere Stufen: Das wasserunlösliche Kunstharz wird erst in Verbindung mit einer organischen Säure in Wasser dispergierbar. Im Bereich des negativ geladen Werkstücks (Kathode) kommt es aufgrund der Wasserstoffentwicklung zu einer alkalischen Grenzschichtbildung (pH 11 bis 13). Durch die erhöhte OH- Konzentration an der Werkstückoberfläche koaguliert der im Wasser gelöste Lack und scheidet sich in Form einer feinen Lackschicht auf dem Bauteil ab. Um eine Sedimentation zu verhindern sowie die Bildung von Toträumen auszuschließen, wird das Bad im Tank mit einer mittleren Strömungsgeschwindigkeit von etwa 0,2 m/s bewegt, bezogen auf den Tankinhalt wird das Bad 4 bis 6 mal pro Stunde umgewälzt. Bei einem Lackverbrauch von 2 bis 3 kg/Karosserie sowie einer nicht zu vernachlässigenden Wasserverdunstung bei Badtemperaturen um 30 °C ist eine ständige Regelung der Badzusammensetzung erforderlich. Die an der Anode frei werdenden organischen Säuren werden durch ein Dialysesystem abgetrennt und somit der pH-Wert des Bades stabil gehalten.
Anschließend folgt eine mehrstufige Spülzone mit Ultrafiltrat aus der Lackrückgewinnung oder vollentsalztem Wasser.

Wird die Automobilscheibe nach abgeschlossenem Lackiervorgang auf den mitlackierten Fensterflansch geklebt, sind folgende Nachteile gegeben. Da der Scheibenkleber auf den Klarlack als Haftgrund abgestimmt sein muss, kann sich bei der Vielzahl der bei einem Hersteller verwendeten Klarlacke eine hohe Komplexität ergeben, weil eine Vielzahl von passenden Klebern bereit gehalten werden muss. Wichtiger ist jedoch die Tatsache, dass die Gesamtverklebungsfestigkeit der Automobilscheibe von der schwächsten Stelle im vielschichtigen Lackaufbau abhängt und damit weit geringer sein kann als die Verklebungsfestigkeit des Klebers auf dem Klarlack.

Es ist daher vorteilhaft, die Scheibe auf die unterste Lackschicht, die KTL-Schicht, aufzubringen. Die Zahl der verwendeten KTL-Präparate bei einem Hersteller ist üblicherweise geringer als die der Klarlacke. Zum einen liegen damit wenige definierte Haftgründe für den Scheibenkleber vor, und zum anderen birgt der Aufbau geprimertes Metall/KTL/Scheibenkleber mit zwei Grenzschichten eine geringere Gefahr des Bruches als ein komplexer Gesamtlackaufbau.

Zum Abdecken des Fensterflansches nach der Aufbringung des KTL lässt sich ein PVC-Plastisol verwenden, wie es in der EP 0 655 989 B1 beschrieben ist. Dieses wird in flüssiger Form auf den Fensterflansch aufgebracht, überlackiert und geliert während der Einbrennphase bei Temperaturen von mindestens 163 °C zu einem festen Film aus. Nachteilig an diesem Verfahren ist, dass für das Demaskieren nach erfolgtem Einbrennen ein "Anfasser" mechanisch freigelegt werden muss, bei dem leicht auch der KTL verletzt werden kann, was die Gefahr nachfolgender Korrosion birgt.
Der Plastisolstreifen kreuzt an den Fensterflanschen zum Teil mehrfach PVC-Nahtabdichtungen, die Schweißnähte auffüllen. Beim Ausgelieren werden häufig starke Verklebungen zwischen Nahtabdichtungen und PVC-Plastisol Fensterflanschabdeckung beobachtet, die eine problemlose Demaskierung erschweren. Ebenfalls zu beobachten sind plastisolbedingte Kontaminationen des Haftgrundes derart, dass sich ein Adhäsionsversagen an der Grenze zwischen Scheibenkleber und ehemals plastisolmaskiertem KTL zeigt.
Die geforderte Verklebungssicherheit der Scheibe ist so nicht gewährleistet.
Diesem kann zwar durch Einsatz eines Primers entgegengewirkt werden, doch ist dieser Schritt arbeitsintensiv, führt zu unerwünschten Lösungsmittelemissionen und kann durch versehentliches Verspritzen oder Tropfen auf dem Klarlack Lackreparaturen nötig machen.

Eine vorteilhaftere Möglichkeit der Maskierung von Fensterflanschen ist die Verwendung von Selbstklebebändern. Deren Vorteil gegenüber dem Plastisol ist die deutlich geringere Schichtdicke von 100 bis 200 µm, die entsprechend weniger Abfallgewicht pro maskiertem Fahrzeug ergibt. Ist der Träger des Klebebandes richtig ausgelegt, kann es nicht nur von Hand, sondern sogar automatisiert per Roboter verklebt werden.
Wie beim Plastisol gilt auch hier, dass die Klebmasse des Maskierklebebandes keine Kontaminationen des Haftgrundes derart hervorrufen darf, dass sich ein Adhäsionsversagen an der Grenze zwischen Scheibenkleber und ehemals maskiertem KTL zeigt.

Bekannt für diese Anwendung ist die Verwendung von Selbstklebmassen auf Basis von Naturkautschuk, Acrylsäureestercopolymeren und Styrolblockcopolymeren. Bei beiden ersteren werden immer wieder Haftungsstörungen beobachtet.
Es ist inzwischen erkannt worden, dass die Haftungsstörungen durch ein komplexes Wechselspiel zustande kommen aus
1. KTL und dessen Einbrennbedingungen,
2. Scheibenkleber und dessen Reaktivität,
3. Maskierklebeband,
4. Einbrennbedingungen von Nahtabdichter, Füller, farbgebendem Decklack und Klarlack.
So ist beobachtet worden, dass die Haftungsstörungen mit der Härte der Einbrennbedingungen zunehmen, besonders wenn diese nahe den von den Beschichtungsstoffherstellern empfohlenen oberen Grenzen der Prozessfenster oder gar darüber sind.
Eine geringere Reaktivität der Scheibenkleber erwies sich dagegen als fördernd für den Haftungsaufbau.

Während bei Naturkautschuk und Acrylsäureestercopolymeren sehr häufig Haftungsstörungen entstehen, zeigen Maskierklebebänder mit Selbstklebemassen auf Basis von Styrolblockcopolymeren eine besondere Verträglichkeit mit der Scheibenkleberhaftung. In der Anwendung kommt es aber zu anderen Problemen, die aus der thermischen Labilität dieser Synthesekautschukgruppe herrühren: oberhalb von ca. 80 °C zeigen die Styrolblockcopolymere erste Schwächen in der Kohäsion, weil die die Kohäsion bedingenden Styroldomänen oberhalb dieser Temperatur allmählich aufweichen. Bei der Anwendung des Maskierklebebandes herrschen Temperaturen von bis zu 180 °C, das heißt, die Selbstklebemasse ist vollkommen verflüssigt und kann Scherkräften, wie sie durch Schrumpf des Trägers bei Verklebungen durch Kurven entstehen, nicht mehr ausreichend widerstehen. In der Folge kann sich der Träger des Maskierklebebandes aus seiner ursprünglichen Position herausziehen, wobei die Selbstklebemasse wenigstens teilweise dort verbleibt, was beim Demaskieren nach der Anwendung Selbstklebemasserückstände zur Folge hat. Wird der Scheibenkleber auf solche Rückstände aufgebracht, ist ein Versagen der Verklebung vorprogrammiert.

Die DE 10 2004 063 330 A1 offenbart ein Klebeband insbesondere zum Abdecken von Fensterflanschen von Automobilen umfassend einen Träger aus zwei übereinander angeordneten Schichten, wobei die erste Schicht aus weichgemachtem Polyvinylchlorid (Weich-PVC), die zweite aus unverstrecktem Polybutylenterephthalat (PBT) besteht, sowie einer auf der ersten oder der zweiten Schicht aufgebrachten Selbstklebemasse.
Die beiden übereinander angeordneten Schichten aus Weich-PVC und unverstrecktem PBT sind dabei durch Einwirkung von Hitze und Druck ohne einen Kaschierkleber miteinander verbunden.

Die DE 199 52 211 A1 beschreibt als Trägermaterial für ein Klebeband zur Fensterflanschmaskierung ein Laminat aus Weich-PVC und Polyester.

Aus der DE 199 52 213 A1 ist ein Klebeband insbesondere zur Fensterflanschmaskierung bekannt, umfassend ein Trägermaterial, auf das eine Selbstklebemasse basierend auf einem Copolymer aus Ethylen, Vinylacetat, Acrylsäureester und gegebenenfalls Acrylsäureamid einseitig aufgetragen ist. Ein solches Copolymer wird in der EP 0 017 986 A1 beschrieben.
Gemäß einer bevorzugten Ausführungsform weist die Selbstklebemasse die folgende Zusammensetzung auf:

| | |
|---|---|
| Ethylen | 10 bis 30, besonders bevorzugt 10 bis 15 Gew.-% |
| Vinylacetat | 20 bis 55, besonders bevorzugt 30 bis 35 Gew.-% |
| Acrylsäureester | 30 bis 69, besonders bevorzugt 50 bis 60 Gew.-% |
| Acrylsäureamid | 0 bis 8, besonders bevorzugt 0,5 Gew.-% |

Aufgabe der Erfindung ist es, eine Maskierlösung mit einem Klebeband zu finden, die die geschilderten Nachteile des Standes der Technik nicht oder nicht in dem Maße zeigt. Insbesondere soll die Maskierlösung mit einem Klebeband keine Haftungsstörungen des Scheibenklebers auf den zuvor maskierten Bereichen erzeugen und bei den anwendungsgemäßen Temperaturen keine Kohäsionsschwächen zeigen, die zu Selbstklebemasserückständen führen.

Gelöst wird diese Aufgabe durch eine Maskierung von Fensterflanschen mit einem Klebeband mit einer Selbstklebemasse auf Basis vernetzter Styrolblockcopolymere, wie sie im Hauptanspruch niedergelegt ist. Gegenstand der Unteransprüche sind dabei vorteilhafte Ausführungsvarianten der Maskierung.

Demgemäß betrifft die Erfindung eine Maskierung von insbesondere mit kathodischem Tauchlack (KTL) überzogenen Untergründen, weiter bevorzugt von Fensterflanschen von Automobilen, mit einem Klebeband versehen mit einer Selbstklebemasse auf Basis vernetzter Styrolblockcopolymere, umfassend die Maskierung mit einem ein- oder mehrschichtigen Träger und einer einseitig darauf aufgebrachten Selbstklebemasse aus mit Metallchelaten vernetzbaren Styrolblockcopolymeren, die zumindest mit einem oder mehreren Klebharzen abgemischt sind. Die Styrolblockcopolymere sind dabei zumindest teilweise säure- oder säureanhydridmodifiziert, um von den Metallchelaten komplexiert werden zu können. Durch diese Vernetzung kann die Temperaturstabilität weit gesteigert werden. Während der Shear Adhesion Failure Temperature Test (SAFT) bei den normalen unvernetzten Styrolblockcopolymermassen selten über 120 °C liegt, kann er durch die Chelatvernetzung auf über 180 °C gesteigert werden.

Der Masseauftrag bei den für die Maskierlösung verwendeten Maskierbändern beträgt zwischen 5 und 80 g/m², bevorzugt zwischen 12 und 40 g/m².

Die Klebkraft auf den KTL-Substraten beträgt dabei zwischen 1 und 8 N/cm, bevorzugt zwischen 2 und 4 N/cm.

Schälkraft von KTL nach anwendungsgemäßer thermischer Belastung von bis zu 100 Minuten bei 170 °C liegt im Bereich zwischen 2 und 10 N/cm.

Als Selbstklebemassen finden bevorzugt solche auf Basis von Blockcopolymeren enthaltend Polymerblöcke überwiegend gebildet von Vinylaromaten (A-Blöcke), bevorzugt Styrol, und solchen überwiegend gebildet durch Polymerisation von 1,3-Dienen (B-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche B-Blöcke enthalten, die teilweise, selektiv oder vollständig hydriert sein können. Blockcopolymere können eine lineare A-B-A-Struktur aufweisen, einsetzbar sind ebenfalls Blockcopolymere von radialer Gestalt sowie sternförmige und lineare Multiblockcopolymere. Als weitere Komponenten können A-B-Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.
Zumindest ein Teil der eingesetzten Blockcopolymere muss dabei säure- oder säureanhydridmodifiziert sein, wobei die Modifizierung hauptsächlich durch radikalische Pfropfcopolymerisation von ungesättigten Mono- und Polycarbonsäuren, wie zum Beispiel Fumarsäure, Itaconsäure, Citraconsäure, Acrylsäure oder Polycarbonsäureanhydriden, wie zum Beispiel Maleinsäureanhydrid, Itaconsäureanhydrid oder Citraconsäureanhydrid, bevorzugt Maleinsäureanhydrid erfolgt. Bevorzugt liegt der Anteil an Säure beziehungsweise Säureanhydrid zwischen 0,5 und 4 Gewichtsprozent bezogen auf das gesamte Blockcopolymer.
Die säure- oder säureanhydridmodifizierten Polymere werden dabei bevorzugt mit Aluminium- oder Titanverbindungen vernetzt, insbesondere Aluminium- oder Titanchelate.

Kommerziell sind solche Blockcopolymere zum Beispiel unter dem Namen Kraton ® FG 1901 und Kraton ® FG 1924 der Firma Kraton, beziehungsweise Tuftec ® M 1913 und Tuftec ® M 1943 der Firma Asahi erhältlich.

Die Haftklebemasse hat vorzugsweise einen Anteil von 20 bis 70 Gewichtsprozent von Styrolblockcopolymer, vorzugsweise 30 bis 60 Gewichtsprozent, und besonders bevorzugt 35 bis 55 Gewichtsprozent, wobei nicht der gesamte Anteil an Blockcopolymeren anhydridmodifiziert vorliegen muss.

Neben den schon genannten säure- oder säureanhydridmodifizierten Vinylaromatenblockcopolymeren können auch noch weitere Säuren oder Säureanhydride zugesetzt werden, um einen höheren Vernetzungsgrad und damit eine noch weiter gesteigerte Kohäsion zu erreichen. Dabei sind sowohl monomere Säureanhydride und Säuren, wie in US 3,970,608 A beschrieben, als auch säure- oder säureanhydridmodifizierte Polymere als auch säureanhydridenthaltende Copolymere wie Polyvinylmethylether-maleinsäureanhydrid-Copolymere, zum Beispiel zu beziehen unter dem Namen Gantrez ®, vertrieben von der Firma ISP, einsetzbar.

Als Klebrigmacher nutzen erfindungsgemäße Selbstklebemassen als Hauptkomponente insbesondere Klebharze, die mit dem Elastomerblock der Vinylaromatenblockcopolymere verträglich sind. Bevorzugt geeignet sind unter anderem: nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder Cg-Monomerströmen, Polyterpenharze auf Basis von α-Pinen und/oder β-Pinen und/oder δ-Limonen, hydrierte Polymerisate von bevorzugt reinen C₈- und C₉-Aromaten. Vorgenannte Klebharze können sowohl allein als auch im Gemisch eingesetzt werden.

Als weitere Additive zur Erzielung spezieller Verbesserungen oder Eigenschaften können typischerweise genutzt werden:
- primäre Antioxidanzien wie zum Beispiel sterisch gehinderte Phenole
- sekundäre Antioxidanzien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Endblockverstärkerharze
- Füllstoffe wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe
- Plastifizierungsmittel wie zum Beispiel Flüssigharze, Weichmacheröle oder niedermolekulare flüssige Polymere, wie zum Beispiel niedermolekulare Polybutene mit zahlenmittleren Molmassen < 1500 g/mol
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.

Die Metalle der Metallchelate können die der 2., 3., 4. und 5. Hauptgruppe und die Übergangsmetalle sein. Besonders geeignet sind zum Beispiel Aluminium, Zinn, Titan, Zirkonium, Hafnium, Vanadium, Niob, Chrom, Mangan, Eisen, Kobalt, und Cer. Besonders bevorzugt sind Aluminium und Titan.

Die Metallchelate können durch die folgende Formel wiedergegeben werden:

(R₁O)ₙ, M (XR₂Y)ₘ,

wobei
- M ein Metall wie oben beschrieben ist;
- R₁ eine Alkyl- oder Arylgruppe wie Methyl, Ethyl, Butyl, Isopropyl oder Benzyl ist;
- n null oder eine größere ganze Zahl ist,
- X und Y Sauerstoff oder Stickstoff sind, die jeweils auch durch eine Doppelbindung an R₂ gebunden sein können;
- R₂ eine X und Y verbindende Alkylengruppe ist, die verzweigt sein kann, oder auch Sauerstoff oder weitere Heteroatome in der Kette enthalten kann;
- m eine ganze Zahl, mindestens jedoch 1 ist.

Bevorzugte Chelatliganden sind solche, die aus der Reaktion folgender Verbindungen entstanden sind: Triethanolamin, 2,4-Pentandion, 2-Ethyl-1,3-Hexandiol oder Milchsäure Besonders bevorzugte Vernetzer sind Aluminium- und Titanacetylacetonate.

Dabei sollte ein annähernd äquivalentes Verhältnis zwischen den Säurebeziehungsweise Säureanhydridgruppen und den Acetylacetonatgruppen gewählt werden, um eine optimale Vernetzung zu erreichen, wobei sich ein kleiner Überschuss an Vernetzer als positiv herausgestellt hat.
Das Verhältnis zwischen Anhydridgruppen und Acetylacetonatgruppen kann aber variiert werden, dabei sollte für eine ausreichende Vernetzung keine der beiden Gruppen in mehr als einem fünffachen molaren Überschuss vorliegen.

Als Träger für das Maskierklebeband eignen sich prinzipiell alle flexiblen, bahnförmigen Materialien mit einer Dicke zwischen 30 und 300 µm wie Polymerfolien, Papier, Metallfolien oder Textilien (Gewebe, Vliese). Wegen der geforderten Anpassungsfähigkeit beim Verkleben des Maskierklebebandes, auch um Kurven herum, und der geforderten Zähigkeit beim Demaskieren des Klebebandes nach Gebrauch sind Polymerfolien bevorzugt geeignet. Insbesondere zu nennen sind Polyesterfolien (insbesondere Polyethylenterephthalat PET, glykolmodifiziertes Polyethylenterephthalat PETG oder Polyethylennaphtalat PEN, auch metallisierte, coextrudierte und/oder geprimerte Varianten), Polyimidfolien, PVC-Folien, bevorzugt weichgemachte PVC-Folien und Polyolefinfolien (Polyethylen und seine Copolymere, Polypropylen und seine Copolymere sowie Blends aus diesen).
Besonders geeignet sind zwei- oder mehrschichtige Laminate aus gleichen oder verschiedenen Polymerfolien oder aus Polymerfolien und Papier beziehungsweise Textilien (Gewebe, Vliese). Die Laminate können verbunden sein durch Selbstklebemassen etwa auf Basis Naturkautschuk, Synthesekautschuk oder Acrylsäureesterpolymerisaten. Auch Hotmeltkleber wie Ethylencopolymere (zum Beispiel Ethylenvinylacetat-, Ethylenacrylsäure- oder Ethylenmaleinsäureanhydridcopolymere) oder reaktive Kaschierkleber zum Beispiel auf Polyurethan- oder Epoxybasis können geeignet sein. In einigen Fällen sind auch Kaschierungen durch Hitze möglich.
Vor der Beschichtung beziehungsweise der Kaschierung der Fügepartner können die Folienoberflächen optional mit Coronaentladung, Flammbehandlung, Plasmabeschichtung oder einer nasschemischen Primerung zur Haftungssteigerung vorbehandelt werden.
Während des Kaschiervorganges kann der Verbund der Fügepartner durch ein Prägewerkzeug mit einer Struktur versehen werden.
Grundsätzlich gibt es keine Vorzugsseite, auf die die Selbstklebemasse beschichtet ist.
Je nach Art der Trägeroberfläche sind geeignete Primer zur Verbesserung der Verankerung der Selbstklebemasse vorteilhaft.

Zur Erleichterung des Handlings kann ein abrollkraftreduzierender Lack auf die nicht klebende Rückseite des Klebebandes aufgetragen sein, der ein Trennmittel wie Silicon, fluororganische Verbindungen oder Polyvinylstearylcarbamat enthält. Alternativ kann das Klebeband auf einem leicht trennenden Abdeckmaterial, zum Beispiel einem silikonbeschichteten Papier, dargereicht werden.

Sinnvolle Anwendungsbreiten sind 10 bis 30 mm, je nach Größe der einzuklebenden Scheibe. Für eine kurvenförmige Verklebung sollte die Breite des Klebebandes 15 mm nicht überschreiten, da dann ein faltenfreies Applizieren kaum noch möglich ist. Sie sollte 10 mm aber auch nicht unterschreiten, damit in jedem Fall eine genügend große Fläche zur sicheren Haftung von Scheibenkleber zu offen liegendem KTL vorhanden ist. Für die Roboterapplikation sind Einsatzbreiten von 12 bis 15 mm üblich.

Des Weiteren sind vom Erfindungsgedanken umfasst ein Fensterflansch, maskiert mit einer erfindungsgemäßen Maskierlösung, sowie ein Automobil mit einem Fensterflansch, maskiert mit einer erfindungsgemäßen Maskierlösung.

Die erfindungsgemäße Maskierlösung wird nachfolgend in bevorzugter Ausführung anhand von Beispielen beschrieben, ohne damit die Erfindung in irgendeiner Weise beschränken zu wollen. Des Weiteren sind Vergleichsbeispiele aufgeführt, in denen untaugliche Maskierlösungen dargestellt sind.

### Beispiele

Im Folgenden werden die Klebebänder beschrieben, mit denen die Maskierungen vorgenommen wurden.

### Beispiel 1

Eine Klebmasse aus 50 Teilen Kraton FG 1901 (SEBS, ohne Zweiblock, mit 30 Gewichtsprozent (im Folgenden nur noch als "%" bezeichnet) Styrolgehalt und gepfropft ca. 2 % Maleinsäureanhydrid, Produkt der Firma Kraton), 50 Teilen Kraton FG 1924 (SEBS mit ca. 40 % Zweiblock, 13% Blockpolystyrol und ca. 1% Maleinsäureanhydrid der Firma Kraton), 90 Teilen Regalite R 1100 (hydriertes Kohlenwasserstoffharz mit einem Erweichungspunkt von ca. 110 °C der Firma Eastman) und 20 Teilen Regalite R 1010 (hydriertes flüssiges Kohlenwasserstoffharz der Firma Eastman) und 2 Teilen Aluminiumacetylacetonat wurden in einem Gemisch aus Toluol und Isopropanol im Verhältnis 9 zu 1 gelöst und direkt auf eine 100 µm PET-Folie so mit Hilfe eines Streichbalkens bestrichen, dass nach dem Trocknen ein Klebmasseauftrag von 25 g/m² resultierte. Das Muster wurde bis zur Verwendung mit einem silikonisierten Trennpapier abgedeckt.

### Beispiel 2

Wie Beispiel 1, in Abweichung dazu wurde eine Klebmasse der Zusammensetzung 50 Teile Kraton FG 1901, 50 Teile Kraton FG 1924, 120 Teile Pentalyn H (hydrierter Kolophoniumester der Firma Eastman), 15 Teile Ondina G 41 (Weißöl mit niedrigem naphtenischen Anteil der Firma Shell) und 2 Teilen Titanylacetylacetonat eingesetzt.

### Beispiel 3

Wie Beispiel 1, in Abweichung dazu wurde eine Klebmasse der Zusammensetzung 50 Teile Kraton FG 1901, 50 Teile Kraton FG 1924, 70 Teile Dercolyte A 115 (α-Pinenharz mit einem Erweichungspunkt von ca. 115 °C der Firma DRT), 40 Teile Wingtack 10 (flüssiges Kohlenwasserstoffharz der Firma Goodyear) und 2 Teile Acetylacetonat eingesetzt.

### Gegenbeispiel 1

Wie Beispiel 1, in Abweichung dazu wurde eine Klebmasse aus 50 Teilen Kraton G 1650 (SEBS, ohne Zweiblock, mit 30 % Styrolgehalt ohne Maleinsäureanhydrid, Produkt der Firma Kraton), 50 Teilen Kraton G 1657 (SEBS mit ca. 40 % Zweiblock, 13 % Blockpolystyrol und ohne Maleinsäureanhydrid der Firma Kraton), 90 Teilen Regalite R 1100 und 20 Teilen Regalite R 1010 verwendet.

### Gegenbeispiel 2

Wie Beispiel 1, in Abweichung dazu wurde eine Klebmasse der Zusammensetzung 50 Teile Kraton G 1650, 50 Teile Kraton G 1657, 120 Teile Pentalyn H und 15 Teile Ondina G 41 eingesetzt.

### Gegenbeispiel 3

Wie Beispiel 1, in Abweichung dazu wurde mit einer Lösung aus 2 Teilen Naturkautschuk in Toluol, die mit 1 Teil Diphenylmethandiisocyanat gemischt worden war, mit einem Auftragsgewicht von 0,3 g/m² geprimert. In einem nachgeschalteten Arbeitsgang wurde auf diesen Primer eine Naturkautschukselbstklebemasse beschichtet. Die Naturkautschukselbstklebemasse bestand aus 100 Teilen Naturkautschuk, 10 Teilen Zinkoxid, 20 Teilen Pentalyn H, 10 Teilen Vulkaresen PA 510 (reaktives Alkylphenolharz der Firma Schenectady), 50 Teilen Regalite R 1100 und 5 Teilen Ondina G 41.

### Gegenbeispiel 4,

Wie Beispiel 1, in Abweichung dazu wurde mit einer Lösung Polyvinylidenchlorid in Toluol geprimert. In einem nachgeschalteten Arbeitsgang wurde auf diesen Primer ein Acrylsäureestercopolymer als Selbstklebemasse beschichtet. Dieses bestand aus 40 Teilen Butylacrylat, 40 Teilen 2-Ethylhexylacrylat, 12 Teilen Vinylacetat, 5 Teilen Methylacrylat und 3 Teilen Acrylsäure.

### Prüfkriterien

Als entscheidende Prüfkriterien für die vorliegende Problemstellung wurden folgende als wesentlich angesehen und herangezogen:
- Klebmasserückstände auf dem KTL nach thermischer Belastung bei Verklebungen mit definiertem Radius
- Haftungsstörung des Scheibenklebers auf der vormals mit in den Beispielen beschriebenen Maskierklebebändern beklebten Stellen

### Durchführung der Tests

### Klebmasserückstände

Aus den beschichteten Mustern wurden Streifen von 15 mm Breite als Prüflinge geschnitten. Diese Prüflinge wurden mit einem Radius von 200 mm auf ein mit KTL (Cathoguard 500 der Firma BASF) beschichtetem und nach Herstellerangaben eingebrannten Blech möglichst faltenfrei verklebt, was nur unter leichter Verdehnung des Trägers möglich war.
Anschließend wurde das dermaßen verklebte Blech in einem auf 170 °C vortemperierten Wärmeschrank platziert und dort für eine Stunde belassen. Nach Abkühlung des Bleches wurde am Außenradius des Prüflings auf Klebmasserückstände beurteilt.

Folgende Kriterien zur Bewertung galten:
+ für keine oder minimale Klebmasserückstände
- für deutlich sichtbare Klebmasserückstände

### Haftungsstörungen

Aus den beschichteten Mustern wurden Streifen von 15 mm Breite als Prüflinge geschnitten. Diese Prüflinge wurden geradlinig auf ein mit KTL (Cathoguard 500) beschichtetem und nach Herstellerangaben eingebrannten Blech faltenfrei verklebt.
Anschließend wurde das dermaßen verklebte Blech in einem auf 170 °C vortemperierten Wärmeschrank platziert und dort für eine Stunde und vierzig Minuten belassen. Nach Abkühlung des Bleches wurde der Prüfling abgezogen, und auf die ehemals beklebte Stelle ein reaktiver 1 K-PU-Scheibenkleber (Sikaflex DM2 der Firma Sika), der zur besseren Verarbeitung auf 50 °C vortemperiert worden war, in Form einer Dreiecksraupe von ca. 1 cm Breite und 1 cm Höhe aufgebracht. Das Dreiecksprofil, dessen Basis auf dem KTL lag, wurde mit Hilfe einer Polyethylenplatte flach gedrückt, so dass die Raupe anschließend eine Höhe von etwa 0,5 cm und eine Breite von etwa 1,2 cm aufwies.
Das Blech wurde zehn Tage bei 23 °C ± 1 °C und einer relativen Luftfeuchtigkeit von 50 % ± 1 % zum Aushärten des Klebers gelagert.

Nach erfolgter Aushärtung wurde die Kleberaupe an einem vorbereiteten Ende angehoben und mit einem Winkel von ca. 90 ° vom Blech abgezogen.
Bei einer guten Verklebung tritt ausschließlich Kohäsionsversagen innerhalb der Kleberaupe auf, also kein Adhäsionsversagen zum KTL. Ein Weiterziehen der Raupe wird dann durch Einschneiden mit einem Messer in den kohäsiv brechenden Raupenrückstand bis auf den KTL erreicht.
Im Falle eines Adhäsionsversagens lässt sich die Kleberaupe ohne wesentliche Rückstände vom KTL abziehen. Bei einem Adhäsionsbruchanteil von mehr als 10 % gilt der Test als nicht bestanden.

Folgende Kriterien zur Bewertung galten:
+ für weniger als 10 % Adhäsionsbruch
- für mehr als 10 % Adhäsionsbruch

### Ergebnisse

Die Ergebnisse der Maskierlösungen sind in folgender Tabelle zusammengefasst.

| | **Klebmasserückstände** | **Haftungsstörungen** |
|---|---|---|
| **Beispiel 1** | **+** | **+** |
| **Beispiel 2** | **+** | **+** |
| **Beispiel 3** | **+** | **+** |
| **Gegenbeispiel 1** | **-** | **+** |
| **Gegenbeispiel 2** | **-** | **+** |
| **Gegenbeispiel 3** | **+** | **-** |
| **Gegenbeispiel 4** | **+** | **-** |

Es zeigt sich, dass die erfindungsgemäßen Maskierlösungen beide wichtige Kriterien gleichzeitig erfüllen, die Gegenbeispiele gemäß dem Stand der Technik hingegen jeweils nur eines und somit untauglich sind.

## Patentansprüche

1. Verwendung eines Klebebands zur Maskierung von insbesondere mit kathodischem Tauchlack (KTL) überzogenen Untergründen, weiter bevorzugt von Fensterflanschen, mit einem ein- oder mehrschichtigen Träger und einer einseitig darauf aufgebrachten Selbstklebemasse enthaltend mit Metallchelaten vernetzte Vinylaromatenblockcopolymere, bevorzugt Styrolblockcopolymere, die zumindest mit einem oder mehreren Klebharzen abgemischt sind, wobei die Vinylaromatenblockcopolymere zumindest teilweise säure- oder säureanhydridmodifiziert sind.

2. Verwendung eines Klebebands nach Anspruch 1, **dadurch gekennzeichnet, dass** der Anteil an Säure beziehungsweise Säureanhydrid zwischen 0,5 und 4 Gewichtsprozent bezogen auf das gesamte Blockcopolymer beträgt.

3. Verwendung eines Klebebands nach Anspruch 1 oder 2, **dadurch gekennzeichnet,**
**dass**
die Klebemasse einen Anteil von 20 bis 70 Gewichtsprozent, vorzugsweise 30 bis 60 Gewichtsprozent, und besonders bevorzugt 35 bis 55 Gewichtsprozent, von Vinylaromatenblockcopolymer aufweist.

4. Verwendung eines Klebebands nach zumindest einem der Ansprüche 1 bis 3, **dadurch gekennzeichnet, dass**
die Vinylaromatenblockcopolymere gebildet werden von Vinylaromaten (A-Blöcke), bevorzugt Styrol, und solchen gebildet durch Polymerisation von 1,3-Dienen (B-Blöcke), bevorzugt Butadien und Isopren.

5. Verwendung eines Klebebands nach zumindest einem der vorherigen Ansprüche,
**dadurch gekennzeichnet, dass**
die Klebemasse besteht aus
zumindest einem säure- oder säureanhydridmodifizierten Vinylaromatenblockcopolymer
zumindest einem Metallchelat der folgenden Formel:
(R₁O)ₙ M (XR₂Y)ₘ,
wobei
M ein Metall der 2. 3. 4. oder 5. Hauptgruppe oder ein Übergangsmetall ist;
R₁ eine Alkyl- oder Arylgruppe ist;
n Null oder eine größere ganze Zahl ist,
X und Y Sauerstoff oder Stickstoff sind, die jeweils auch durch eine Doppelbindung an R₂ gebunden sein können;
R₂ eine X und Y verbindende Alkylengruppe ist, die verzweigt sein kann, oder auch Sauerstoff oder weitere Heteroatome in der Kette enthalten kann;
m eine ganze Zahl, mindestens jedoch 1 ist,
sowie zumindest einem Klebharz.

6. Verwendung eines Klebebands nach zumindest einem der vorherigen Ansprüche,
**dadurch gekennzeichnet, dass**
als Chelatliganden solche verwendet werden, die aus der Reaktion folgender Verbindungen entstanden sind: Triethanolamin, 2,4-Pentandion, 2-Ethyl-1,3-Hexandiol oder Milchsäure.

7. Verwendung eines Klebebands nach zumindest einem der vorherigen Ansprüche,
**dadurch gekennzeichnet, dass**
als Vernetzer Aluminium- und Titanacetylacetonate eingesetzt werden.

8. Verwendung eines Klebebands nach zumindest einem der vorherigen Ansprüche,
**dadurch gekennzeichnet, dass**
die Klebmasse weitere Abmischkomponenten enthält, insbesondere Weichmacher, Alterungsschutzmittel, Verarbeitungshilfsmittel, Füllstoffe, Farbstoffe, Stabilisatoren.

9. Verwendung eines Klebebands nach zumindest einem der vorherigen Ansprüche,
**dadurch gekennzeichnet, dass**
der Masseauftrag der Klebemasse auf den Träger zwischen 5 und 80 g/m², bevorzugt zwischen 12 und 40 g/m² liegt.

10. Verwendung eines Klebebands nach zumindest einem der vorherigen Ansprüche,
**dadurch gekennzeichnet, dass**
die Klebkraft des Klebebands auf den KTL-Substraten beträgt zwischen 1 und 8 N/cm, bevorzugt zwischen 2 und 4 N/cm und/oder die Schälkraft von KTL nach anwendungsgemäßer thermischer Belastung von bis zu 100 Minuten bei 170 °C im Bereich zwischen 2 und 10 N/cm liegt.

11. Fensterflansch, maskiert mit einem Klebeband nach zumindest einem der vorherigen Ansprüche.

12. Automobil mit einem Fensterflansch, maskiert mit einem Klebeband nach zumindest einem der vorherigen Ansprüche.

## Claims

1. Use of an adhesive tape for masking substrates, especially substrates coated with cathodic electrocoat (CED) material, more preferably window flanges, with a single-layer or multi-layer backing and applied to one side thereof a self-adhesive composition comprising metal chelate-crosslinked vinylaromatic block copolymers, preferably styrene block copolymers, which are blended at least with one or more tackifier resins, the vinylaromatic block copolymers being at least partly acid-modified or acid anhydride-modified.

2. Use of an adhesive tape according to Claim 1, **characterized in that** the fraction of acid or acid anhydride is between 0.5 and 4 per cent by weight, based on the block copolymer as a whole.

3. Use of an adhesive tape according to Claim 1 or 2, **characterized in that** the adhesive has a fraction of 20 to 70 per cent by weight, preferably 30 to 60 per cent by weight and more preferably 35 to 55 per cent by weight of vinylaromatic block copolymer.

4. Use of an adhesive tape according to at least one of Claims 1 to 3, **characterized in that** the vinylaromatic block copolymers are formed of vinylaromatics (A blocks), preferably styrene, and blocks formed by polymerization of 1,3-dienes (B blocks), preferably butadiene and isoprene.

5. Use of an adhesive tape according to at least one of the preceding claims, **characterized in that** the adhesive is composed of at least one acid-modified or acid anhydride-modified vinylaromatic block copolymer,
at least one metal chelate of the following formula:
(R₁O)ₙM(XR₂Y)ₘ
where
M is a metal of main group 2, 3, 4 or 5, or a transition metal;
R₁ is an alkyl or aryl group;
n is zero or a greater whole number;
X and Y are oxygen or nitrogen, and may each also be attached through a double bond to R₂;
R₂ is an alkylene group connecting X and Y and may be branched, or else may contain oxygen or other heteroatoms in the chain;
m is a whole number, but is at least 1,
and also at least one tackifier resin.

6. Use of an adhesive tape according to at least one of the preceding claims, **characterized in that** chelate ligands used are those formed from the reaction of the following compounds: triethanolamine, 2,4-pentanedione, 2-ethyl-1,3-hexanediol or lactic acid.

7. Use of an adhesive tape according to at least one of the preceding claims, **characterized in that** crosslinkers used are aluminium acetylacetonates and titanium acetylacetonates.

8. Use of an adhesive tape according to at least one of the preceding claims, **characterized in that** the adhesive comprises further blend components, especially plasticizers, ageing inhibitors, processing aids, fillers, dyes, stabilizers.

9. Use of an adhesive tape according to at least one of the preceding claims, **characterized in that** the coatweight of the adhesive on the backing is between 5 and 80 g/m², preferably between 12 and 40 g/m².

10. Use of an adhesive tape according to at least one of the preceding claims, **characterized in that** the bond strength of the adhesive tape on the CED substrates is between 1 and 8 N/cm, preferably between 2 and 4 N/cm, and/or the peel strength from cathodic electrocoat after thermal exposure in accordance with the application, of up to 100 minutes at 170°C, is in the range between 2 and 10 N/cm.

11. Window flange masked with an adhesive tape according to at least one of the preceding claims.

12. Car with a window flange masked with an adhesive tape according to at least one of the preceding claims.

## Revendications

1. Utilisation d'une bande adhésive pour le masquage de substrats, en particulier revêtus de laque cathodique à électro-immersion (KTL), préférence en outre de rebords de vitres, présentant un support à une ou plusieurs couches et une masse autoadhésive appliquée sur une face de celui-ci, contenant des copolymères à blocs d'aromatiques de vinyle réticulés avec des chélates métalliques, de préférence des copolymères à blocs de styrène qui sont mélangés au moins avec une ou plusieurs résines adhésives, où les copolymères à blocs d'aromatiques de vinyle sont au moins partiellement modifiés avec un acide ou un anhydride d'acide.

2. Utilisation d'une bande adhésive selon la revendication 1, **caractérisée en ce que** la proportion d'acide ou d'anhydride d'acide est située entre 0,5 et 4% en poids par rapport à la totalité du copolymère à blocs.

3. Utilisation d'une bande adhésive selon la revendication 1 ou 2, **caractérisée en ce que** la masse adhésive présente une proportion de 20 à 70% en poids, de préférence de 30 à 60% en poids et de manière particulièrement préférée de 35 à 55% en poids, de copolymère à blocs d'aromatiques de vinyle.

4. Utilisation d'une bande adhésive selon au moins l'une quelconque des revendications 1 à 3, **caractérisée en ce que** les copolymères à blocs d'aromatiques de vinyle sont formés par des aromatiques de vinyle (blocs A), de préférence le styrène, et de blocs formés par la polymérisation de 1,3-diènes (blocs B), de préférence le butadiène et l'isoprène.

5. Utilisation d'une bande adhésive selon au moins l'une quelconque des revendications précédentes, **caractérisée en ce que** la masse adhésive est constituée par
- au moins un copolymère à blocs d'aromatiques de vinyle modifié par un acide ou un anhydride d'acide,
- au moins un chélate métallique présentant la formule suivante :
(R₁O)ₙM(XR₂Y)ₘ,
où
M représente un métal du 2ème, 3ème, 4ème ou 5ème groupe principal ou un métal de transition ;
R₁ représente un groupe alkyle ou aryle ;
n vaut zéro ou un nombre entier plus grand,
X et Y représentent oxygène ou azote, qui peuvent également être liés à chaque fois par une double liaison à R₂ ;
R₂ représente un groupe alkylène reliant X et Y, qui peut être ramifié ou également contenir de l'oxygène ou d'autres hétéroatomes dans la chaîne ;
m vaut un nombre entier, généralement cependant 1,
ainsi qu'au moins une résine adhésive.

6. Utilisation d'une bande adhésive selon au moins l'une quelconque des revendications précédentes, **caractérisée en ce qu'**on utilise comme ligands de type chélate ceux qui sont formés par la réaction des composés suivants : triéthanolamine, 2,4-pentanedione, 2-éthyl-1,3-hexanediol ou acide lactique.

7. Utilisation d'une bande adhésive selon au moins l'une quelconque des revendications précédentes, **caractérisée en ce qu'**on utilise comme réticulants des acétylacétonates d'aluminium et de titane.

8. Utilisation d'une bande adhésive selon au moins l'une quelconque des revendications précédentes, **caractérisée en ce que** la masse adhésive contient d'autres composants dans le mélange, en particulier des plastifiants, des agents de protection contre le vieillissement, des adjuvants de transformation, des charges, des colorants, des stabilisateurs.

9. Utilisation d'une bande adhésive selon au moins l'une quelconque des revendications précédentes, **caractérisée en ce que** la masse appliquée de masse adhésive sur le support est située entre 5 et 80 g/m², de préférence entre 12 et 40 g/m².

10. Utilisation d'une bande adhésive selon au moins l'une quelconque des revendications précédentes, **caractérisée en ce que** l'adhésivité de la bande adhésive sur les substrats KTL est située entre 1 et 8 N/cm, de préférence entre 2 et 4 N/cm et/ou la force de pelage de la KTL après une charge thermique conforme à l'utilisation pendant jusqu'à 100 minutes à 170°C est située dans la plage entre 2 et 10 N/cm.

11. Rebord de vitre, masqué par une bande adhésive selon au moins l'une quelconque des revendications précédentes.

12. Voiture présentant un rebord de vitre, masqué par une bande adhésive selon au moins l'une quelconque des revendications précédentes.
